Europäisches Patentamt

(19) European Patent Office

Office européen des brevets

(11) Publication number: **0 113 381**
**A1**

# (12) EUROPEAN PATENT APPLICATION

(21) Application number: 82307022.2

(22) Date of filing: 31.12.82

(51) Int. Cl.³: **B 01 J 29/28**
**C 10 G 45/64**

(43) Date of publication of application:
18.07.84 Bulletin 84/29

(84) Designated Contracting States:
DE FR GB NL

(71) Applicant: MOBIL OIL CORPORATION
150 East 42nd Street
New York New York 10017(US)

(72) Inventor: Banta, Frederick
Buck Road P.O. Box 187
Elmer New Jersey 08318(US)

(72) Inventor: Milstein, Donald
41 Forest Hill Drive
Cherry Hill New Jersey 08003(US)

(72) Inventor: Oleck, Stephen Michael
241 Williams Avenue
Moorestown New Jersey 08057(US)

(72) Inventor: Shih, Stuart Shan-San
7 Abinger Lane
Cherry Hill New Jersey 08003(US)

(74) Representative: West, Alan Harry et al,
Mobil Court 3 Clements Inn
London WC2A 2EB(GB)

(54) Process for simultaneous desulfurization and dewaxing of petroleum oils and catalysts therefor.

(57) Petroleum oils, especially resids boiling above 350°C, can be simultaneously hydrodesulfurized and hydrodewaxed by treating them with hydrogen under conventional hydrodesulfurization conditions in contact with a catalyst comprising an alumina, silica or silica-alumina support, a ZSM-5 type zeolite and Group VIA and/or VIII metal oxides or sulfides. Preferred catalysts 70 to 95 wt. % alumina and 5 to 30 wt. % ZSM-5 and contain 5-20 wt. % NiO and 2-10 wt. % $MoO_3$.

EP 0 113 381 A1

F-1045(1084)-L                    -1-

## PROCESS FOR SIMULTANEOUS DESULFURIZATION
## AND DEWAXING OF PETROLEUM OILS AND CATALYSTS THEREFOR

This invention relates to the hydroprocessing of petroleum oils, especially those containing residual hydrocarbon components and having significant sulfur contents, and relates more particularly to a process for simultaneously reducing the sulfur content and the pour point of heavy petroleum oils containing residual hydrocarbon components and to a catalyst for use in such a process.

It is conventional to effect sulfur removal from hydrocarbon stocks by subjecting such stocks to treatment with hydrogen at elevated temperature and pressures in contact with a catalyst containing hydrogenating components. Typical catalysts are those containing Group VIA or Group VIII metals or their oxides or sulfides, with such hydrogenating components being supported on a variety of well-known carriers, for example alumina, kieselguhr, zeolitic molecular sieves and other materials having high surface areas.

U.S. Patent 3,546,103, for example teaches hydrodesulfurization with a catalyst of cobalt and molybdenum on an alumina base; U.S. Patent 3,755,146 describes a process for preparing lube oils characterized by low pour points, utilizing a catalyst mixture comprising hydrogenation components, a conventional cracking catalyst that can be either crystalline or amorphous, and a crystalline aluminosilicate of the ZSM-5 type; and U.S. Patent 3,894,938 describes the sequential catalytic dewaxing and desulfurization of high pour point, high sulfur gas oils to lower their sulfur content by contacting such oils first with a ZSM-5 type zeolite hydrodewaxing catalyst that may contain a hydrogenation/dehydrogenation component, in the presence or absence of added hydrogen, followed by conventional hydrodesulfurization of the dewaxed intermediate.

Although hydroprocessing is a highly developed technology, there exists today a great need for efficient and economical means for hydrodesulfurizing resids in order to make them more valuable refinery chargestocks. Heavy resids in particular contain large amounts of sulfur and other contaminants that result in undesirable effects such as corrosion, pollution or poisoning of the catalyst. The removal or
at the least a significant reduction in the amount of such contaminants
is therefore essential to the upgrading of such stocks. However, in
order to provide a suitable upgrading stock other foreign elements such
as metals, nitrogen, oxygen and halogen materials also need to be
removed from the resids. Known hydrodesulfurization processes employ
severe conditions, such as temperatures of about 200 to 500°C or more,
pressures of about 3,500 to 21,000 kPa and space velocities of about
0.2 to about 5 LHSV and are simply uneconomical and in their own right
create additional problems. However, none of the known processes uses
a catalyst that is capable of simultaneously hydrodewaxing and hydrodesulfurizing heavy residual petroleum stocks.

The present invention is based on the observation that
petroleum oils can be simultaneously dewaxed and desulfurized by
treatment with hydrogen in the presence of a catalyst comprising a
hydrodesulfurization (HDS) catalyst with a small amount of a ZSM-5 type
zeolite.

Accordingly, the present invention provides a catalyst
composition for use in the simultaneous hydrodesulfurization and
hydyrodewaxing of petroleum oils, comprising alumina, silica,
silica-alumina or a mixture thereof as support in intimate contact with
a ZSM-5 type zeolite, and containing as hydrogenation component an
oxide or sulfide of a Group VIA metal and/or Group VIII metal.

The present invention also provides a process for
simultaneously hydrodesulfurizing and hydrodewaxing a petroleum oil
which comprises contacting the petroleum oil with hydrogen in the
presence of such a catalyst at a temperature of from 315 to 455°C, at a
pressure of from 3,500 to 21,000 kPa and at a space velocity of from
0.1 to 5.0 LHSV.

The catalyst according to the present invention can be
obtained by mixing a ZSM-5 type zeolite with a conventional HDS
catalyst to obtain an intimate mixture of both components.
Conventional commercial HDS catalysts that may be used in this way
include, for example, Chevron's ICR-706 (Ni-W-Ti/$SiO_2$/$Al_2O_3$) and
Cyanamid's HDS-1441 (Ni-Mo/$Al_2O_3$). For practical reasons, it may be desirable to incorporate the ZSM-5 type zeolite in a matrix
material, as is well known in the art.

Alternatively, the catalyst can be manufactured by first
compositing the ZSM-5 type zeolite with the alumina, silica or
silica-alumina support and then impregnating the resulting composite
with a salt of a Group VIA metal and/or Group VIII metal and
subsequently converting the metal into its oxide or sulfide.

The ZSM-5 type zeolite may be used as such, in the hydrogen
ion form, i.e. as HZSM-5 for example, or in a base-exchanged form
containing a hydrogenating metal, especially a Group VIII metal, for
example nickel or palladium, or a rare earth metal.

The zeolite component of the catalyst according to the
invention is a ZSM-5 type zeolite, that is to say a crystalline,
aluminosilicate zeolite having a silica-to-alumina mole ratio above 12
and a Constraint Index of from 1 to 12. The term 'Constraint Index',
its significance and method of determination are described in U.S.
Patent 3,907,915, for example. Examples of such zeolites are ZSM-5,
ZSM-11, ZSM-12, ZSM-35 and ZSM-38; ZSM-5 is especially preferred. Such
zeolites are essentially characterized by their X-ray diffraction
patterns, the significant lines of which are characteristic of the
crystalline structure of the particular zeolite and substantially
independent of such features as crystalline silica/alumina ratio and
ion content. The characteristic X-ray diffraction data of ZSM-5 are
fully described in U.S. Patent 3,702,886; those of ZSM-11 are described
in U.S. Patent 3,709,979; those of ZSM-12 are described in U.S. Patent
3,832,449; those of ZSM-35 are described in U.S. Patent 4,016,245; and
those of ZSM-38 are described in U.S. Patent 4,046,859.

The catalyst compositions according to the present invention
may contain from 20 to 99% of the alumina, silica or silica-alumina
support and from 1 to 80% of the ZSM-5 type zeolite, but preferably
contain from 70 to 95% of the support and from 5 to 30% of the zeolite,
based on the weight of the zeolite and support. It is significant that
the amount of zeolite in the catalyst composition is preferably
restricted to a relatively low level; the reason for this is that large
amounts of zeolite may negatively affect the desulfurization activity of the catalyst without having any compensating effect on its dewaxing activity.  This phenomenon is illustrated in the following Examples.

The Group VIA and Group VIII metal oxide and/or sulfide components of the catalyst compositions of the invention are suitably present in amounts of from 2 to 20%, preferably from 5 to 20%, of the Group VIA metal oxide or sulfide and from 1 to 10%, preferably from 2 to 10% of the Group VIII metal oxide or sulfide, based on the weight of the total catalyst composition.  The preferred Group VIA metals are tungsten and molybdenum and the preferred Group VIII metals are cobalt and nickel, and any combinations of such metals may be used.  An especially preferred combination, however, is that of nickel and molybdenum, both as their oxides, i.e. as NiO and $MoO_3$.  Preferably, the molar ratio of the Group VIA metal oxide or sulfide to the Group VIII metal oxide or sulfide is from 0.5 to 4.0.

The Group VIA and/or Group VIII metal may be impregnated into the support or support/zeolite composite in an entirely conventional manner, that is by treating the support or support/zeolite composite with a solution, for example aqueous solution, of a thermally-decomposable salt of the metal, drying the wet material and then calcining it to convert the metal salt into the metal oxide.  The oxide can then be sulfided to convert the oxide into the sulfide, if desired.

The process according to the present invention results in the simultaneous hydrodesulfurization and hydrodewaxing of the petroleum oil chargestock to obtain a high yield of distillate product of low sulfur content and reduced pour point.  The process is useful for the treatment of whole crudes and of various fractions thereof, but is especially useful for the treatment of petroleum residua where demetalation is not a major concern, and is highly suitable for the treatment of atmospheric residua (350°C+).  While the process may also be used for treating vacuum residua and distillates that are difficult to dewax with conventional catalysts, it is especially applicable to residua containing from 1.0 to 5.0% sulfur, having pour points of 10 to 55°C, and boiling above 350°C.  Apart from achieving products having reduced sulfur contents and lower pour points, the process of the invention has the further benefit of reducing the fluidity of heavy fuel oil products, thereby reducing the amount of cutter stock that needs to be added to them to produce commercial grade, heavy fuel oils.

As stated above, the process involves bringing the sulfur-containing petroleum oil chargestock together with hydrogen under a pressure of 3,500 to 21,000 kPa and at 315 to 455°C into contact with a catalyst according to the invention at a space velocity of 0.1 to 5 LHSV (0.1 to 5 volumes of chargestock per volume of catalyst per hour). The hydrogen is suitably circulated at a rate of 180 to 2,700 Nl/l (liters of hydrogen-measured at standard temperature and pressure - per liter of chargestock), preferably 540 to 1,400 Nl/l. That hydrogen may have a purity of 60 to 100% which can be maintained (if the hydrogen is recycled in the conventional manner) by bleeding off part of the hydrogen and adding makeup hydrogen. The recycled hydrogen is suitably washed or otherwise treated in a conventional manner to chemically absorb hydrogen sulfide entrained in it.

According to a further aspect of the invention, when the chargestock has a particularly high sulfur content and/or when it is desired that the product should have a very low sulfur content, it may be advantageous to operate the process using the catalyst of the invention in conjunction with a conventional HDS catalyst. This can be achieved, for example, by mixing the two catalysts in appropriate proportions or by including them in separate layers in the same catalyst bed.

The following Examples illustrate the invention. In the Examples, the petroleum oil feeds used are Arab Light Atmospheric Resid, Lagomedio Atmospheric Resid and Alaskan North Slope Vacuum Resid. These feedstocks have the properties set out in following Tables I, II and III:

## TABLE I

### Arab Light Atmospheric Resid

| Fraction | Whole | $C_5$–195°C | 195–345°C | 345–415°C | 415°C+ |
|---|---|---|---|---|---|
| Yield, wt.% | 100 | 0.8 | 20.0 | 16.7 | 62.5 |
| **Properties** | | | | | |
| API Gravity | 19.8 | – | 39.5 | 26.7 | 14.0 |
| Sulfur, wt.% | 2.89 | – | 0.72 | 2.25 | 3.36 |
| Pour Point, °C | – | – | –26 | 16 | 4 |
| Hydrogen, wt.% | 11.78 | – | – | 11.95 | – |
| Nitrogen, ppm | 1400 | – | – | – | 2200 |
| Vanadium, ppm | 28 | – | – | – | 46.2 |
| Nickel, ppm | 6 | – | – | – | 9.4 |

## TABLE II

### Lagomedio Atmospheric Resid

| | |
|---|---|
| API Gravity | 18.1 |
| Pour Point, °C | 24 |
| Sulfur, wt. % | 1.99 |
| Hydrogen, wt. % | 11.87 |
| Nickel, ppm | 21 |
| Vanadium, ppm | 220 |
| CCR, wt. % | 7.8 |

## TABLE III

### North Slope Vacuum Resid

| | |
|---|---|
| Pour point, °C | >46 |
| Sulfur, wt. % | 2.10 |

F-1045(1084)-L                    -7-

## Example 1

The hydrodewaxing/hydrodesulfurization activities of a conventional HDS catalyst (Co/Mo/Al$_2$O$_3$, as described in U.S. Patent 4,016,067) – Catalyst 1A – and of a noble metal-containing zeolite catalyst (0.3% Pd on 65% ZSM-5/35% Al$_2$O$_3$) – Catalyst 1B – were compared using Arab Light Atmospheric Resid and the following operating conditions:

|  |  |  |
|---|---|---|
| temperature | : | 415°C |
| pressure | : | 14,000 kPa |
| LHSV | : | 0.25 |
| hydrogen circulation | : | 890 Nl/l |

Product properties from these runs are set out in the following Table IV:

### TABLE IV

| Catalyst: | | 1B | 1A |
|---|---|---|---|
| **195-345 °C Properties** | | | |
| Gravity, °API | | 23.9 | 35.5 |
| Sulfur, % Wt. | | 2.45 | 0.0002 |
| Pour Pt., °C | | -54 | -18 |
| | | | |
| **345-415°C Properties** | Feed | | |
| Gravity, °API | 26.7 | 19.9 | 32.0 |
| Sulfur, % Wt. | 2.25 | 2.89 | 0.0006 |
| Pour Pt., °C | 16 | -46 | 13 |
| Cloud Pt., °C | | -54 | 16 |
| | | | |
| **415°C+ Properties** | | | |
| Gravity, °API | 14.0 | 10.3 | 25.5 |
| Sulfur, % Wt. | 3.36 | 2.92 | 0.063 |
| Nickel, ppmw | 9.4 | 4.7 | 1.1 |
| Vanadium, ppmw | 46.2 | 1.6 | 0.1 |
| Pour Pt., °C | 4 | -18 | -7 |

F-1045(1084)-L                    -8-

These data show that the ZSM-5 zeolite reduces the pour point of the 195°C+ fraction but it does not reduce the sulfur content.  In contrast, the Co/Mo catalyst does not reduce the pour point but it does have high desulfurization activity.

Example 2

Five further runs were carried out for nine days using the same chargestock and same operating conditions as those used in Example 1 except that the LHSV was 0.5, using the following catalysts:

Catalyst 2A     - Cyanamid HDS 1441 (a commercial resid HDS catalyst);

Catalyst 2B     - a dual catalyst system comprising 10% of 65% NiZSM-5/35% $Al_2O_3$ atop 90% of HDS 1441;

Catalyst 2C     - a dual catalyst system comprising 90% of HDS 1441 atop 10% of 65% NiZSM-5/35% $Al_2O_3$;

Catalyst 2D     - 5% NiO + 17% $MoO_3$ on 30% ZSM-5/70% $Al_2O_3$;

Catalyst 2E     - 50% of Catalyst 2D and 50% of Ketjen 153 (a commercial resid HDS catalyst).

The properties of the products obtained are shown in the following Table V:

## TABLE V

| Catalyst: | 2A | 2B | 2C | 2D | 2E |
|---|---|---|---|---|---|
| **195-345°C Properties** | | | | | |
| Gravity, °API | 34.7 | 31.0 | 33.3 | 30.8 | 33.2 |
| Sulfur, % Wt. | 0.002 | 0.016 | 0.017 | 0.025 | 0.006 |
| Pour Pt., °C | -15 | -26 | -26 | -54 | -7 |
| **345-415°C Properties** | | | | | |
| Gravity, °API | 30.7 | 28.3 | 29.5 | 26.6 | 27.9 |
| Sulfur, % Wt. | 0.008 | 0.067 | 0.09 | 0.171 | 0.06 |
| Pour Pt., °C | 10 | -1 | 2 | -54 | -18 |
| **415°C+ Properties** | | | | | |
| Gravity, °API | 24.4 | 19.7 | 21.9 | 18.4 | 20.1 |
| Sulfur, % Wt. | 0.39 | 0.51 | 0.537 | 0.922 | 0.35 |
| Nickel, ppmw | 7.0 | 5.4 | - | 6 | 4.8 |
| Vanadium, ppmw | 16 | 16 | - | 13 | 11.4 |
| Pour Pt., °C | -4 | -9 | -4 | -7 | -15 |

The data in Table V show that the runs using ZSM-5 reduced the pour point of the 195-415°C distillate fractions significantly more than HDS-1441 did.  Catalyst 2B, 2C and 2D also exhibit significantly more desulfurization activity than the $Pd/ZSM-5/Al_2O_3$ catalyst used in Example 1.

Catalyst 2D has the highest dewaxing activity of the first four catalysts, but it also has the lowest desulfurization activity.

Catalyst 2E gives balanced hydrodesulfurization and dewaxing activites: -18°C pour point and 0.06 wt. % sulfur for the 345-415°C fraction and 0.35 wt. % sulfur  in the 415°C+ fraction.  These are important, because it means that the 345-415°C fraction can be blended directly into the distillate pool, and the 415°C fraction meets the 0.5 wt. % sulfur specification that is generally required for this fraction.

The typical process yields from these tests are shown in the following Table VI:

## TABLE VI

|  | Charge | Catalyst 2A | Catalyst 2B | Catalyst 2D | Catalyst 2E |
|---|---|---|---|---|---|
| **Process Yields** | | | | | |
| $C_1-C_3$, Wt % | - - | 0.55 | 2.2 | 3.1 | 2.5 |
| $C_4$, Wt % | - | 0.25 | 2.9 | 4.5 | 3.1 |
| $C_5$-195°C | 0.8 | 2.41 | 6.5 | 7.8 | 9.0 |
| 195-345°C | 20.0 | 25.8 | 18.7 | 15.6 | 19.3 |
| 345-415°C | 16.7 | 19.3 | 18.2 | 14.6 | 15.9 |
| 415°C+ | 62.5 | 50.0 | 49.0 | 53.3 | 48.9 |
| Useful gasoline plus distillate*, Wt % | 20.8 | 28.21 | 25.2 | 38.0** | 44.2** |

*$C_5$-345°C
**Includes the 345-415°C fraction

Since Catalysts 2D and 2E give a low pour point 345-415°C fraction which can be blended with the distillate pool, the useful gasoline and distillate yields are 38.0 wt. % and 44.2 wt. % respectively.  As shown in Table VI, the useful gasoline and distillate yield for the conventional hydrodesulfurization catalyst (i.e., HDS-1441) is 28.2 wt. %.

Example 3

Seven further runs were carried out using Lagomedio Atmospheric Resid to compare the action of known HDS catalysts with catalysts according to the invention but containing different proportions of zeolite.  The runs were carried out on a batch basis in a one-liter shaker bomb (as described by J.W. Payne, C.W. Streed and E.R. Kent in Ind. Eng. Chem. 50, 47 (1956)) at 14,000 kPa, 400°C and a 20:1 oil-to-catalyst weight ratio for 80 minutes, using the following catalysts:

Catalyst 3A:

the resid hydroprocessing catalyst described in U.S. Patents 3,876,523 and 4,082,695, containing 10 weight % $MoO_3$ and 3.5 weight % CoO on a 0.8 mm diameter extruded $Al_2O_3$ support;

Catalyst 3B:

a commercial resid-hydrodesulfurization catalyst that contains 15 weight % $MoO_3$ and 3 weight % CoO in the form of 0.8 mm diameter cylindrical $Al_2O_3$ pellets;

Catalyst 3C:

was prepared as follows:  Kaiser substrate alumina, a commercial, alpha-alumina monohydrate powder, was mixed with water, extruded to 0.8 mm diameter pellets, dried and calcined at 540°C.  One hundred grams of the calcined pellets were impregnated with 82 ml of a solution containing 26.8 grams ammonium heptamolybdate and dried, and then impregnated with 70 ml of a solution containing 20.4 grams nickel (II) chloride hexahydrate and dried, and then recalcined at 540°C.  The final composition contained 17 weight % $MoO_3$ and 5 weight % CoO;

Catalyst 3D:

was prepared as follows:  Kaiser substrate alumina and dried
ZSM-5 crystals were blended in proportions to obtain a mixture of 15
weight % ZSM-5 and 85 weight % $Al_2O_3$ on an ignited basis; this was
mixed with water, extruded to 0.8 mm diameter pellets, dried and
calcined at 540°C in flowing nitrogen and then flowing air.  The
calcined extrudate was then exchanged with ammonium nitrate solution to
obtain a low residual sodium level and dried.  The product had 86.4
weight % solids content and 0.01 weight % sodium content.

One hundred grams of the product were impregnated with 65 ml of
a solution containing 23.1 grams ammonium heptamolybdate and dried, and
then impregnated with 53 ml of a solution containing 17.6 grams nickel
(II) chloride hexahydrate and dried, and then recalcined at 540°C.  The
final composition contained 17 weight % $MoO_3$ and 5 weight % NiO;

Catalyst 3E:

was prepared in a similar manner to that of Catalyst 3D with
the exception that the extrudate contained 30 weight % ZSM-5 and 70
weight % $Al_2O_3$.  This extrudate was ammonium exchanged and then
treated with Mo and Ni salts and calcined in the manner described for
Catalyst 3D to obtain a catalyst containing 17 weight % $MoO_3$ and 5
weight % NiO;

Catalyst 3F:                -

was prepared in the same manner as Catalyst 3E with the
exception that the dried, ammonium-exchanged extrudate was calcined at
540°C in flowing air.  The final catalyst contained 17 weight % $MoO_3$
and 5 weight % NiO;

Catalyst 3G:

was prepared in the same manner as Catalyst 3D except that the
composition on an ignited basis was 65 weight % ZSM-5 and 35 weight %
$Al_2O_3$.  The final catalyst contained 17 weight % $MoO_3$ and 5 weight
% NiO.

The properties of these catalysts are shown in the following
Table VII.

TABLE VII

| Catalyst | 3A | 3B | 3C | 3D | 3E | 3F | 3G | 7[1] |
|---|---|---|---|---|---|---|---|---|
| % ZSM-5 Content[2] | 0 | 0 | 0 | 15 | 30 | 30 | 65 | 0 |
| **Density, g/cc** | | | | | | | | |
| Packed | 0.74 | 0.82 | 0.67 | 0.67 | 0.62 | 0.64 | 0.74 | – |
| Particle | 1.23 | 1.20 | 1.19 | 1.14 | 1.15 | 1.16 | 1.16 | – |
| Real | 3.66 | 3.45 | 3.62 | 3.49 | 3.30 | 3.36 | 2.89 | – |
| Pore Volume, cc/g | 0.538 | 0.542 | 0.566 | 0.590 | 0.567 | 0.566 | 0.516 | 0.513 |
| Surface Area, $m^2/g$ | 103 | 270 | 183 | 199 | 227 | 224 | 276 | 225 |
| Av. Pore Diameter, Angstroms | 209 | 80 | 124 | 119 | 100 | 101 | 75 | 80 |
| **Pore Volume Distribution [3] % in pores of** | | | | | | | | |
| 0-30 A Diameter | 11 | 12 | 5 | 14 | 13 | 14 | 32 | 1 |
| 30-50 A Diameter | 1 } | } 85 | 8 | 3 | 5 | 6 | 9 } | } 83 |
| 50-80 A Diameter | 2 } | | 17 | 13 | 17 | 17 | 8 } | |
| 80-100 A Diameter | 5 | 1 | 9 | 8 | 10 | 9 | 3 | 6 |
| 100-150 A Diameter | 20 | 1 | 28 | 27 | 31 | 31 | 7 } | } 3 |
| 150-200 A Diameter | 54 | 0 | 25 | 31 | 15 | 14 | 4 } | |
| 200-300 A Diameter | 2 | 0 | 3 | 2 | 5 | 5 | 5 | 0 |
| 300+ A Diameter | 5 | 1 | 5 | 2 | 4 | 4 | 32 | 2 |

(1) described in following Example 7.
(2) based on weight of zeolite plus alumina.
(3) 30 Angstroms + distribution determined by mercury porosimetry on basis of 130° contact angle and 474 dynes/cm surface tension.

The properties of the products obtained are set out in the following Table VIII:

F-1045(1084)-L                    -13-

TABLE VIII

| Catalyst | 3A | 3B | 3C | 3D | 3E | 3F | 3G |
|---|---|---|---|---|---|---|---|
| % ZSM-5 Content[1] | 0 | 0 | 0 | 15 | 30 | 30 | 65 |
| Properties of Liquid Product | | | | | | | |
| Sulfur, wt.% | 1.27 | 1.09 | 0.85 | 0.93 | 1.05 | 1.13 | 1.75 |
| Pour Point, °C | 13 | 18 | 18 | -12 | -23 | -23 | -21 |
| Sulfur Removal, wt.% | 36 | 45 | 57 | 53 | 47 | 43 | 12 |
| Pour Point Reduction, °C | 11 | 6 | 6 | 42 | 47 | 47 | 44 |

(1) based on weight of zeolite plus alumina.

These results show that the ZSM-5-containing catalysts (3D, 3E, 3F, 3G) reduced the pour point of the resid sharply below those obtained with the conventional hydroprocessing catalysts (3A, 3B, 3C) that contained no ZSM-5, and at the same time were just as effective for reducing sulfur. The catalysts containing 15-30% ZSM-5 (3D, 3E, 3F) desulfurize the atmospheric resid as well as the commercial desulfurization catalyst 3B and also provide the necessary dewaxing activity, as shown by pour point reduction.

With catalyst 3G containing more than 30% ZSM-5, little or no more additional pour point reduction is realized with this stock, while desulfurization declines below that produced with the commercial catalysts.

However, catalysts according to the invention containing the larger amounts of ZSM-5 may be used in two or more stage systems as described in following Example 7.

The hydrogenation function, attributable to the nickel (or cobalt) and molybdenum is also needed in the catalyst. A catalyst containing 65% ZSM-5 but no NiMo or CoMo was tested similarly. Product pour point was -21°C, indicating high dewaxing activity; but the sulfur level was 2.37 wt. %, indicating not only no reduction in sulfur but also an increase in sulfur content because of loss of light products.

F-1045(1084)-L          -14-

## Example 4

Two catalysts were used to hydroprocess a North Slope vacuum resid in the shaker bomb unit used in Example 3 at 15,300 kPa and 400°C for 160 minutes and an oil-to-catalyst weight ratio of 10. The catalysts were the Catalyst 3E and a Catalyst 4 used commercially for hydrodewaxing distillate fuels. This Catalyst 4 contained 65% ZSM-5 zeolite and 35% $Al_2O_3$ and also 1.0 weight percent nickel which was added by exchanging the extrudate with a nickel salt solution. The results obtained are set out in the following Table IX:

### TABLE IX

| Catalyst | Pour Point, °C | Sulfur, wt. % |
|---|---|---|
| (Charge) | > 46 | 2.10 |
| 3E | -4 | 0.39 |
| 4 | 16 | 1.37 |

Catalyst 3E containing nickel and molybdenum and only 30% ZSM-5 was much more effective for both dewaxing and desulfurization than Catalyst 4 containing much more (65%) ZSM-5 zeolite but only 1% nickel by exchange.

## Example 5

Catalyst 3E was also used in a similar run with North Slope vacuum resid except that the pressure was only 3,500 kPa, which is more typical of distillate hydrodewaxing. The results obtained are set out in the following Table X:

### TABLE X

| | Product Properties | |
|---|---|---|
| Catalyst | Pour Point °C | Sulfur wt. % |
| (Charge) | > 46 | 2.10 |
| 3E | -1 | 0.88 |

F-1045(1084)-L                    -15-

The results show that Catalyst 3E is effective at this low pressure with a reduction in pour point of greater than 47°C and in sulfur of 58%.

## Example 6

In this Example, Arab Light atmospheric resid was hydroprocessed in a trickle-bed reactor under conventional resid desulfurization conditions (14,000 kPa; 385°C; hydrogen circulation 450 Nl/l; 0.5 LHSV). The purpose was to produce a low pour point, low sulfur 345-415°C distillate fraction that could be blended into the distillate pool. Target specifications for products were:

| fraction | sulfur, wt.% | pour point, °C |
|----------|--------------|----------------|
| 345-415°C | $\leq 0.25$ | $\leq -18$ |
| 415°C+ | $\leq 0.5$ | - |

The results obtained using the commercial hydrodesulfurization Catalyst 3B are set out in the following Table XI:

## TABLE XI

| Fraction | Whole | $C_5$-195°C | 195-345°C | 345-415°C | 415°C+ |
|----------|-------|-------------|-----------|-----------|--------|
| Yield, wt. % | 100 | 2.4 | 25.8 | 19.3 | 50.0 |
| **Properties** | | | | | |
| API Gravity | 29.8 | - | 34.5 | 31.0 | 21.9 |
| Sulfur, wt. % | 0.30 | - | 0.002 | 0.006 | 0.35 |
| Pour Point, °C | - | - | -15 | 13 | -1 |
| Hydrogen, wt. % | 12.80 | - | 13.49 | 12.80 | |
| Nitrogen, ppm | 600 | - | 24 | 110 | 900 |

Although the 345-415°C fraction from this conventional hydrodesulfurization would meet sulfur specification, it is waxy (greater than 10°C pour point) and cannot be considered for blending in the distillate pool. It is therefore marketed as heavy fuel.

F-1045(1084)-L                    -16-

The gasoline-plus-distillate yield was 28.2 wt. % (2.4 + 25.8 wt. %), compared to 20.8 wt. % (0.8 + 20.0 wt. %) in the charge.

The results obtained using Catalyst 3E according to the invention are set out in the following Table XII:

## TABLE XII

| Fraction | Liquid Product | C5-195°C | 195-345°C | 345-415°C | 415°C+ |
|---|---|---|---|---|---|
| Yield, wt. % | - | 7.8 | 15.6 | 14.6 | 53.3 |
| Properties | | | | | |
| API Gravity | 26.5 | - | 30.8 | 26.6 | 18.4 |
| Sulfur | 0.60 | - | 0.025 | 0.17 | 0.92 |
| Pour Point, °C | - | - | -54 | -54 | -7 |
| Hydrogen, wt. % | 12.40 | - | 12.69 | 12.68 | 11.80 |
| Nitrogen, ppm | 1000 | - | 34 | 200 | 1700 |

This data shows that there is produced a low sulfur, low pour point 345-415°C fraction that can be included in the distillate pool. Thus, the gasoline-plus-distillate yield is now 38.0 wt. % compared to 28.2 wt. % for conventional hydrodesulfurization. However, the 0.92 weight percent sulfur content of the 415°C+ fraction is considerably above the specified target of $\leq$ 0.5 weight percent.

## Example 7

This Example illustrates that hydroprocessing catalysts of the present invention may be used simultaneously with known hydrodesulfurizing catalysts in a dual catalyst system to produce a 345-415°C fraction that is acceptable for the distillate pool and lower in sulfur in the 415°C+ fraction. The dual catalyst system comprised 50% by weight of the Catalyst 3E over 50% of a catalyst 7 (a commercial nickel-molybdenum alumina hydrodesulfurization catalyst, the properties of which are set out in Table VII above). The results obtained by treating Arab. Light atmospheric resid under the conditions specified in Example 6 are set out in the following Table XIII:

F-1045(1084)-L                    -17-

## TABLE XIII

| Fraction | Liquid Product | C$_5$-195°C | 195-345°C | 345-415°C | 415°C+ |
|---|---|---|---|---|---|
| Yield, wt. % | – | 9.0 | 19.3 | 15.9 | 48.9 |
| **Properties** | | | | | |
| API Gravity | 28.8 | – | 33.2 | 27.9 | 20.1 |
| Sulfur, wt. % | 0.28 | – | 0.006 | 0.06 | 0.35 |
| Pour Point, °C | – | – | -7 | -18 | -15 |
| Hydrogen, wt. % | 12.90 | – | 13.18 | 12.98 | 12.47 |
| Nitrogen, ppm | 700 | – | 25 | 140 | 1100 |

In this Example, the 345-415°C fraction has a low sulfur content (0.06 wt. %) and low pour point (-18°C) and is suitable for inclusion in the distillate pool. The total gasoline-plus-distillate yield therefore becomes 44.2 wt. % compared to 28.2 wt. % for conventional hydroprocessing as illustrated in Example 6.

Moreover, this system upgraded the 415°C+ fraction to below the target of 0.5 wt. % sulfur.

## Example 8

This Example illustrates that the hydroprocessing of resids over a combination of a conventional desulfurization catalyst and a conventional dewaxing catalyst fails to produce the desired pour point and sulfur levels in the products. The catalyst system comprised by volume 10% of Catalyst 3G over 90% of Catalyst 3D. The results obtained by treating Arab Light atmospheric resid under the conditions specified in Example 6, are set out in the following Table XIV:

## TABLE XIV

| Fraction | 195-345°C | 345-415°C | 415°C+ |
|---|---|---|---|
| properties: | | | |
| sulfur, wt. % | 0.029 | 0.08 | 0.57 |
| pour point, °C | -26 | 2 | 2 |

F-1045(1084)-L                    -18-

CLAIMS:

1.   A catalyst composition for use in the simultaneous hydrodesulfurization and hydrodewaxing of petroleum oils, comprising alumina, silica, silica-alumina or a mixture thereof as support in intimate contact with a ZSM-5 type zeolite and containing as hydrogenation component an oxide or sulfide of a Group VIA metal and/or Group VIII metal.

2.   A catalyst composition according to claim 1, comprising from 20 to 99% of support and from 1 to 80% of ZSM-5 type zeolite based on the weight of the support and zeolite, and from 2 to 20% of a Group VIII metal oxide or sulfide and from 1 to 10% of a Group VIA metal oxide or sulfide based on the weight of the total composition.

3.   A catalyst composition according to claim 2, comprising from 70 to 95% of support and from 5 to 30% of a ZSM-5 type zeolite based on the weight of support and zeolite.

4.   A catalyst composition according to claim 2 or claim 3, comprising from 5 to 20% of a Group VIII metal oxide or sulfide and from 2 to 10% of a Group VIA metal oxide or sulfide based on the weight of the total composition.

5.   A catalyst composition according to any one of claims 1 to 4, wherein the support is alumina, the zeolite is ZSM-5, the Group VIII metal is nickel and the Group VIA metal is molybdenum.

6.   A process for simultaneously hydrodesulfurizing and hydrodewaxing a petroleum oil which comprises contacting the petroleum oil with hydrogen in the presence of a catalyst according to any one of claims 1 to 5, at a temperature of from 315-455°C, a pressure of from 3,500 to 21,000 kPa and a space velocity of from 0.1 to 5.0 LHSV.

7.    A process according to claim 6, wherein the hydrogen is fed to the process at a rate of 180 to 2,700 Nl/l of petroleum oil.

8.    A process according to claim 6 or claim 7, wherein the petroleum oil is a residual fraction boiling above 350°C.

9.    A process according to any one of claims 6 to 8, wherein the catalyst is used in conjunction with a conventional hydrodesul-furization catalyst.

8085N/0360N

## European Patent Office

### EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | GB-A-2 045 105 (CHEVRON) * Claims 1-3,10; page 3, lines 17-23; page 2, lines 56-61 * | 1-9 | B 01 J 29/28 C 10 G 45/64 |
| X,Y | US-A-3 755 145 (ORKIN) * Claims 1-6; column 4, line 56; column 6, lines 20-52; column 7, lines 25-32 * | 1-9 | |
| Y | US-A-4 089 775 (BERGER et al.) * Claims 1-19 * | 1-9 | |
| Y | GB-A-2 027 742 (MOBIL OIL) * Claims 1-3; page 5, lines 11-14 * | 1 | |
| Y | EP-A-0 027 380 (MOBIL OIL) * Claims 1-13 * | 1-3 | TECHNICAL FIELDS SEARCHED (Int. Cl. ³) C 10 G 45/64 |

The present search report has been drawn up for all claims

| Place of search THE HAGUE | Date of completion of the search 31-08-1983 | Examiner MICHIELS F. |
|---|---|---|